# EUROPÄISCHE PATENTSCHRIFT

(11) **EP 3 009 955 B1**
(45) Veröffentlichungstag und Bekanntmachung des Hinweises auf die Patenterteilung: **10.05.2017**
(21) Anmeldenummer: 15185684.6
(22) Anmeldetag: 17.09.2015
(51) Int. Cl.: G06K 7/00, G07C 9/00

(54) **SYSTEM ZUR ASYNCHRONEN SERIELLEN DATENÜBERTRAGUNG UND SICHERHEITSSCHALTER**
SYSTEM FOR ASYNCHRONOUS SERIAL DATA TRANSMISSION AND SAFETY SWITCH
SYSTEME DE TRANSMISSION DE DONNEES EN SERIE ASYNCHRONE ET COMMUTATEUR DE SECURITE

(30) Priorität: 13.10.2014 DE 102014114811
(43) Veröffentlichungstag der Anmeldung: 20.04.2016
(73) Patentinhaber: SICK AG, 79183 Waldkirch/Breisgau (DE)
(72) Erfinder: Phay, Victor Kok Heng, 507082 Singapur (SG)
(74) Vertreter: Manitz Finsterwald Patentanwälte PartmbB

(56) Entgegenhaltungen:
- WO-A2-01/26048
- US-A- 5 952 922

## Beschreibung

Die vorliegende Erfindung betrifft ein System zur asynchronen seriellen Datenübertragung mit einer Sendeeinheit, welche zum Aussenden einer Nachricht ausgelegt ist, und wenigstens einer Empfangseinheit, welche zum Empfangen der Nachricht ausgelegt ist, wobei die Nachricht zumindest ein Identifikationsdatenfeld und ein Nutzdatenfeld umfasst.

Bei einem System zur asynchronen seriellen Datenübertragung werden Zeichen asynchron, d.h. zu beliebigen Zeiten, übertragen, wobei die Datenübertragung sowohl drahtgebunden als auch drahtlos erfolgen kann. Im Gegensatz zu einer synchronen Datenübertragung ist die Übertragung nicht an einem Taktsignal ausgerichtet. Um eine Synchronisation der Empfangseinheit auf die von der Sendeeinheit ausgesendete Nachricht zu erreichen, ist es notwendig, zu Beginn der Nachricht ein Synchronisations- oder Startsignal auszusenden.

Oftmals wird zu diesem Zweck zu Beginn der Nachricht ein sogenanntes Headerdatenfeld, welches auch als Präambel bezeichnet wird, als Synchronisations- oder Startsignal ausgesendet.

Ein Beispiel für eine Sendeeinheit eines Systems zur asynchronen seriellen Datenübertragung, die als Synchronisationssignal zu Beginn einer Nachricht zunächst ein Headerdatenfeld sendet, ist der integrierte Schaltkreis EM4200 der Firma EM Microelektronic-Marin SA, welcher als so genannter RFID-Transponder für ein RFID-System ausgestaltet ist.

RFID-Systeme (Radio Frequency Identification) werden zum automatischen und berührungslosen Identifizieren und/oder Lokalisieren von Objekten mit Radiowellen verwendet. Ein RFID-System umfasst typischerweise zunächst einen als Sendeeinheit dienenden Transponder (auch als "Tag" oder "Funketikett" bezeichnet), der eine Antenne umfasst und sich an oder in einem Objekt befindet. Der Transponder umfasst in der Regel einen kennzeichnenden Code, der über die Antenne von einem als Empfangseinheit dienenden Lesegerät des RFID-Systems (auch als "Transceiver" bezeichnet) abgefragt werden kann. Der Transceiver umfasst dazu ebenfalls eine Antenne und einen Transceiverschaltkreis zum Auslesen dieser Kennung von dem Transponder. Zum Auslesen der Kennung von dem Transponder erzeugt das Lesegerät typischerweise magnetische Wechselfelder, um Signale an den Transponder zu übertragen. Der Transponder ist dazu ausgebildet, nach Erhalt eines entsprechenden Signals vom Lesegerät Daten, insbesondere eine die Kennung umfassende Nachricht, als Antwort an das Lesegerät zurückzusenden, welches diese an ein System (z.B. ein Computersystem) zur weiteren Verwertung weiterleitet bzw. mittels eines Mikrocontrollers selber auswerten kann. Der Begriff des Zurücksendens wird hier auch verwendet, wenn der Transponder ausgestaltet ist, das Magnetfeld des Lesegerätes zu beeinflussen, ohne selbst ein Magnetfeld zu erzeugen. Diese Beeinflussung wird dann vom Lesegerät detektiert.

Ein RFID-Transponder wie der genannte EM4200 sendet im Anschluss an das Headerdatenfeld zunächst ein Identifikationsdatenfeld, in welchem verschiedene Identifikationsinformationen codiert sein können, beispielsweise ein Ländercode oder auch ein Typencode, welcher den jeweiligen RFID-Transponder einer bestimmten Gerätekategorie zuordnet und/oder eine eindeutige Identifikationsnummer, z.B. eine Seriennummer, umfasst.

Im Anschluss an das Identifikationsdatenfeld wird ein Nutzdatenfeld gesendet, welches weitere Informationen, beispielsweise Messwerte eines mit dem RFID Transponder gekoppelten Sensors oder eine Summe zur Fehlerkorrektur, enthalten kann.

In WO 01/26048 A2 und US 5 952 922 A sind gattungsgemäße RFID-Systeme beschrieben, bei denen die Synchronisation mit Hilfe eines spezifischen Synchronisationsbitmusters erfolgt, das als Headerdatenfeld zu Beginn der Nachricht ausgesendet wird.

Es ist eine Aufgabe der vorliegenden Erfindung, ein System zur asynchronen seriellen Datenübertragung zu schaffen, welches eine verbesserte Möglichkeit zur Synchronisation der empfangenen Daten aufweist.

Die Lösung der Aufgabe erfolgt durch die Merkmale des Anspruchs 1. Erfindungsgemäß ist vorgesehen, dass in der Empfangseinheit ein Referenzcode hinterlegt ist, welcher zumindest mit einem Teilcodeabschnitt des Identifikationsdatenfeldes übereinstimmt, und dass die Empfangseinheit dazu ausgelegt ist, kontinuierlich eine zuletzt empfangene Zeichenfolge aus einem Datenstrom der empfangenen Nachricht mit dem Referenzcode zu vergleichen und sich nach einem Feststellen einer Übereinstimmung zwischen der Zeichenfolge und dem Referenzcode auf die nachfolgenden Zeichen der Nachricht zu synchronisieren.

Mit anderen Worten umfasst das Identifikationsdatenfeld einen Codeabschnitt, der mit dem Referenzcode identisch ist. Die Empfangseinheit wertet kontinuierlich die bisher von der Sendeeinheit empfangenen Zeichen dahingehend aus, ob diese mit dem Referenzcode übereinstimmen. Sobald eine solche Übereinstimmung festgestellt worden ist, erfolgt die Synchronisation auf die nachfolgenden Zeichen der Nachricht.

Wenn die von Empfangseinheit empfangene Nachricht keinen dem Referenzcode entsprechenden Codeabschnitt enthält, erfolgt keine Synchronisation, d.h., die Nachricht wird auch nicht ausgewertet.

Grundsätzlich kann der Referenzcode bzw. der im Referenzcode entsprechende Codeabschnitt das gesamte Identifikationsdatenfeld umfassen. Es ist aber auch möglich, nur einen Codeabschnitt bzw. Teilcodeabschnitt des Identifikationsdatenfeldes zur Synchronisation zu verwenden. Sofern im letzteren Fall der dem Referenzcode entsprechende Codeabschnitt das Ende des Identifikationsdatenfeldes bildet, erfolgt die Synchronisation unmittelbar nach der Feststellung der Übereinstimmung auf das nun folgende Nutzdatenfeld. Falls nach einem dem Referenzcode entsprechenden Codeabschnitt noch weitere Identifikationsdaten gesendet werden, kann die Synchronisation auch erst mit einem bestimmten Offset erfolgen, welcher z.B. der Länge dieser weiteren Identifikationsdaten entspricht.

Grundsätzlich ist die Erfindung nicht auf ein unidirektionales Datenübertragungssystem beschränkt, sondern umfasst auch bidirektionale Datenübertragungssysteme, bei denen die Sendeeinheit zugleich als Empfangseinheit und die Empfangseinheit zugleich als Sendeeinheit ausgebildet sein kann. Dabei muss die die Erfindung nicht zwingend in beiden Datenübertragungsrichtungen verwirklicht sein, sondern kann auch nur in einer Richtung zur Anwendung gelangen.

Gemäß einer vorteilhaften Ausführungsform der Erfindung ist das Identifikationsdatenfeld, insbesondere der dem Referenzcode entsprechende Teilcodeabschnitt des Identifikationsdatenfeldes, unmittelbar am Anfang der Nachricht positioniert. Die Nachricht umfasst also kein dem Identifikationsdatenfeld vorangestelltes Headerdatenfeld, so dass die Nachricht gemäß dieser Ausführungsform bei gleicher Datenkapazität für Identifikations- und Nutzdaten deutlich kürzer ist als eine Nachricht nach dem Stand der Technik. Durch den Entfall des Headerdatenfeldes vermindert sich also die zu übertragende Datenmenge und damit auch die zum Lesen der gesamten Nachricht erforderliche Dekodierzeit, was die Leistungsfähigkeit des Systems erhöht.

Gemäß einer weiteren vorteilhaften Ausführungsform weist die Empfangseinheit einen FIFO-Pufferspeicher (FIFO = First-In-First-Out) auf, welcher dazu ausgelegt ist, die Zeichenfolge während des Empfangens der Nachricht zwischenzuspeichern. Ein solcher FIFO- Pufferspeicher stellt eine wirtschaftlich und technisch einfache Lösung dar, um einen kontinuierlichen Vergleich zwischen der empfangenen Zeichenfolge und dem Referenzcode durchzuführen.

Vorteilhafterweise entspricht hierbei die Speicherkapazität des FIFO-Pufferspeichers genau der Länge des Referenzcodes.

Vorzugsweise erfolgt die Datenübertragung zwischen der Sendeeinheit und Empfangseinheit drahtlos. Da bei drahtloser Datenübertragung die Übertragungsrate oftmals geringer ist als bei drahtgebundener Datenübertragung, wirken sich die hier erläuterten Vorteile besonders positiv aus.

Gemäß einer weiteren vorteilhaften Ausführungsform ist die Empfangseinheit als ein RFID-Lesegerät und die Sendeeinheit als ein RFID-Transponder ausgestaltet. Bei dem RFID-Transponder kann es sich sowohl um einen aktiven Transponder mit eigener Energieversorgung als auch um einen passiven Transponder handeln, der seine zum Betrieb notwendige Energie aus einem von dem RFID-Lesegerät erzeugten Magnetfeld bezieht.

In einem weiteren Aspekt betrifft die vorliegende Erfindung einen Sicherheitsschalter zum Überwachen einer vorgegebenen Relativposition zweier zueinander beweglicher Teile, welcher mit einem System gemäß der vorliegenden Erfindung ausgestattet ist, wobei die Empfangseinheit als ein RFID-Lesegerät und die Sendeeinheit als ein RFID-Transponder ausgestaltet sind, wobei das RFID-Lesegerät an dem einen Teil und der RFID-Transponder an dem anderen Teil angeordnet sind und wobei eine Datenübertragung nur dann möglich ist, wenn sich die Teile in der vorgegebenen Relativposition befinden. Die Vorteile eines solchen Sicherheitsschalters ergeben sich aus denjenigen, die bereits im Zusammenhang mit dem erfindungsgemäßen System erläutert wurden.

Vorteilhafterweise können solche Sicherheitsschalter an Sicherheitstüren, bei denen die zu überwachende Relativposition der Schließposition entspricht, bei Linearverfahrachsen, Drehgestellen oder ähnlichem eingesetzt werden, um z.B. den Zugang zu einer gefährlichen Maschine oder auch eine gefährliche Bewegung abzusichern.

Sicherheitsschalter kommen in Anwendungen zum Einsatz, bei denen hoher Manipulationsschutz gefordert ist. Dafür wird der in dem RFID-Transponder gespeicherte Code im RFID-Lesegerät mit dem erwarteten Code, d.h. dem Referenzcode, verglichen. Aufgrund der Kodierung wird eine Überbrückung des Sicherheitsschalters wesentlich erschwert. Die Sicherheitsschalter können besonders klein ausgebildet sein und übermitteln das Ergebnis aus dem genannten Vergleich z.B. über einen binären Ausgang oder kommunizieren z.B. mit einer zentralen Auswerteeinheit in einem Schaltschrank.

Weitere vorteilhafte Ausgestaltungen der Erfindung ergeben sich aus den abhängigen Ansprüchen, der Beschreibung und den Zeichnungen.

Nachfolgend wird die Erfindung anhand eines Ausführungsbeispiels und den beiliegenden Zeichnungen näher erläutert.

Es zeigen:
- Fig. 1: eine schematische Darstellung einer Nachricht gemäß dem Stand der Technik,
- Fig. 2: eine schematische Darstellung einer Nachricht gemäß der vorliegenden Erfindung, und
- Fig. 3: ein Zeitdiagramm eines Empfangs einer solchen Nachricht in einer Empfangseinheit eines erfindungsgemäßen Datenübertragungssystems.

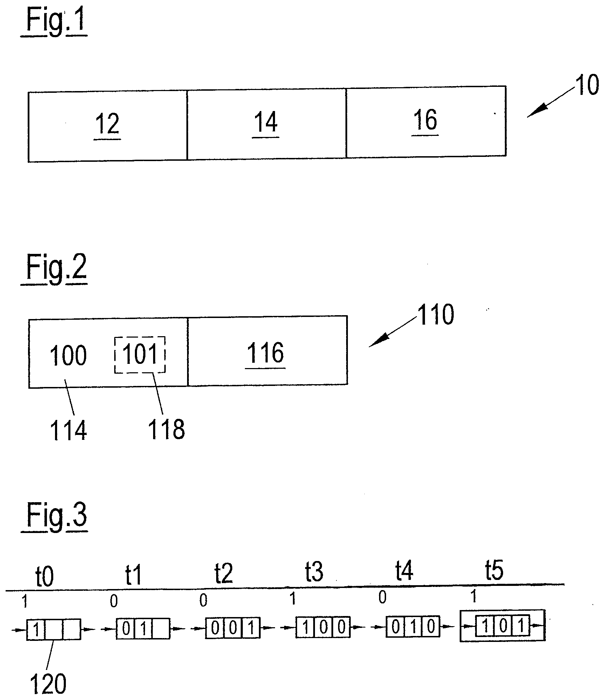

Fig. 1 zeigt beispielhaft eine Nachricht 10, wie sie in einem System zur asynchronen seriellen Datenübertragung (nicht dargestellt) gemäß dem Stand der Technik von einer Sendeeinheit an eine Empfangseinheit übertragen wird. Das Datenformat dieser Nachricht 10 kann beispielsweise der Norm ISO 11785 entsprechen, wie dies bei dem eingangs genannten RFID-Transponder EM4200 der Fall ist.

Die Nachricht 10 umfasst nach diesem Datenformat ein Headerdatenfeld 12, dessen Länge 11 Bit beträgt und die Zeichenfolge 0 0 0 0 0 0 0 0 0 0 1 aufweist. Daran schließt sich ein Identifikationsdatenfeld 14 an, das im genannten Beispiel 72 Bit lang ist und u.a. einen numerischen Ländercode und einen nationalen Identifikationscode umfasst. Im Anschluss an das Identifikationsdatenfeld 14 folgt ein hier nicht näher spezifiziertes Nutzdatenfeld 16 mit einer Länge von insgesamt 45 Bit.

Fig. 2 zeigt ein Beispiel einer Nachricht 110, wie sie bei einem erfindungsgemä-ßen System zur asynchronen seriellen Datenübertragung übertragen wird. Die Nachricht umfasst hier ein Identifikationsdatenfeld 114, dessen Länge in diesem Ausführungsbeispiel 6 Bit beträgt, und daran anschließend ein Nutzdatenfeld 116, dessen Inhalt und Länge hier nicht näher spezifiziert sind. Ein Headerdatenfeld ist nicht vorgesehen.

Das Identifikationsdatenfeld 114 weist die Zeichenfolge 1 0 0 1 0 1 auf. Ein Teilcodeabschnitt 118 des Identifikationsdatenfeldes 114 ist mit einem gestrichelt dargestellten Rahmen versehen und weist die Zeichenfolge 1 0 1 auf.

In einer Empfangseinheit (nicht dargestellt) des erfindungsgemäßen Datenübertragungssystems ist ein Referenzcode hinterlegt, der mit dem Teilcodeabschnitt 118 identisch ist, also ebenfalls die Zeichenfolge 1 0 1 aufweist. Grundsätzlich können in der Empfangseinheit anstelle eines einzigen Referenzcodes auch mehrere Referenzcodes hinterlegt sein.

Anhand des matrixartigen Zeitdiagramms gemäß Fig. 3 wird nun die Funktionsweise des erfindungsgemäßen Datenübertragungssystems näher erläutert. In der ersten Zeile dieser Matrix sind 6 aufeinanderfolgende Zeitpunkte t0 bis t5 bezeichnet. In der zweiten Zeile ist jeweils das Datenbit angegeben, dass von der Empfangseinheit zu dem jeweiligen Zeitpunkt empfangen wurde. In der dritten Zeile ist ein FIFO-Pufferspeicher 120 oder Schieberegister dargestellt, dessen Speicherkapazität 3 Bit beträgt. Die Datenflussrichtung des FIFO-Pufferspeichers 120 ist durch Pfeile gekennzeichnet.

In der linken Speicherstelle des FIFO-Pufferspeichers 120 befindet sich das zum jeweiligen Zeitpunkt empfangene Datenbit. Zum nächstfolgenden Zeitpunkt werden die im FIFO-Pufferspeicher 120 gespeicherten Datenbits jeweils um eine Stelle nach rechts verschoben und das neu empfangene Datenbit in die linke Speicherstelle geschrieben. Somit "wandert" der empfangene Datenstrom von links nach rechts durch den FIFO-Pufferspeicher 120.

Jedes Mal, wenn ein neues Datenbit empfangen und in den FIFO-Pufferspeicher 120 geschrieben wurde, wird der Inhalt des FIFO-Pufferspeichers 120 mit dem Referenzcode verglichen. Wenn eine Übereinstimmung zwischen der im FIFO-Pufferspeicher 120 gespeicherten Zeichenfolge und dem Referenzcode festgestellt wird, synchronisiert sich die Empfangseinheit auf die nachfolgenden Zeichen der Nachricht 110. Eine solche Übereinstimmung ist in Fig. 3 zum Zeitpunkt t5 gegeben, an dem sich der Teilcodeabschnitt 118 mit der Zeichenfolge 1 0 1 im FIFO-Pufferspeicher 120 befindet. Da zu diesem Zeitpunkt alle Zeichen des Identifikationsdatenfeldes 114 übertragen wurden, synchronisiert sich die Empfangseinheit unmittelbar auf die Zeichen des Nutzdatenfeldes 116.

### Bezugszeichenliste:

- 10,110: Nachricht
- 12: Headerdatenfeld
- 14,114: Identifikationsdatenfeld
- 16, 116: Nutzdatenfeld
- 118: Teilcodeabschnitt
- 120: FIFO-Pufferspeicher

## Patentansprüche

1. System zur asynchronen seriellen Datenübertragung mit wenigstens einer Sendeeinheit, welche zum Aussenden einer Nachricht (110) ausgelegt ist, und wenigstens einer Empfangseinheit, welche zum Empfangen der Nachricht (110) ausgelegt ist, wobei die Nachricht (110) zumindest ein Identifikationsdatenfeld (114) und ein Nutzdatenfeld (116) umfasst,
**dadurch gekennzeichnet,**
**dass** in der Empfangseinheit ein Referenzcode hinterlegt ist, welcher zumindest mit einem Teilcodeabschnitt (118) des Identifikationsdatenfeldes (114) übereinstimmt, und
**dass** die Empfangseinheit dazu ausgelegt ist, kontinuierlich eine zuletzt empfangene Zeichenfolge aus einem Datenstrom der empfangenen Nachricht (110) mit dem Referenzcode zu vergleichen und sich nach einem Feststellen einer Übereinstimmung zwischen der Zeichenfolge und dem Referenzcode auf die nachfolgenden Zeichen der Nachricht (110) zu synchronisieren.

2. System nach Anspruch 1,
**dadurch gekennzeichnet,**
**dass** das Identifikationsdatenfeld (114), insbesondere der dem Referenzcode entsprechende Teilcodeabschnitt (118) des Identifikationsdatenfeldes (114), unmittelbar am Anfang der Nachricht (110) positioniert ist.

3. System nach einem der vorhergehenden Ansprüche,
**dadurch gekennzeichnet,**
**dass** die Empfangseinheit einen FIFO-Pufferspeicher (120) aufweist, welcher dazu ausgelegt ist, die Zeichenfolge während des Empfangens der Nachricht (110) zwischenzuspeichern.

4. System nach Anspruch 3,
**dadurch gekennzeichnet,**
**dass** die Speicherkapazität des FIFO-Pufferspeichers (120) genau der Länge des Referenzcodes entspricht.

5. System nach einem der vorhergehenden Ansprüche,
**dadurch gekennzeichnet,**
**dass** die Datenübertragung zwischen der Sendeeinheit und der Empfangseinheit drahtlos erfolgt.

6. System nach einem der vorhergehenden Ansprüche,
**dadurch gekennzeichnet,**
**dass** die Empfangseinheit als ein RFID-Lesegerät und die Sendeeinheit als ein RFID-Transponder ausgestaltet sind.

7. Sicherheitsschalter zum Überwachen einer vorgegebenen Relativposition zweier zueinander beweglicher Teile, mit einem System nach Anspruch 6, wobei das RFID-Lesegerät an dem einen Teil und der RFID-Transponder an dem anderen Teil angeordnet sind, wobei eine Datenübertragung nur dann möglich ist, wenn sich die Teile in der vorgegebenen Relativposition befinden.

## Claims

1. A system for asynchronous serial data transmission having at least one transmission unit which is configured for transmitting a message (110) and having at least one reception unit which is configured for receiving the message (110), wherein the message (110) comprises at least one identification data field (114) and one payload field (116),
**characterized in that**
a reference code is stored in the reception unit and at least coincides with a part code section (118) of the identification data field (114); and
**in that** the reception unit is configured to continuously compare a most recently received character sequence from a data stream of the received message (110) with the reference code and to synchronize itself with respect to the successive characters of the message (110) after a determination of coincidence between the character sequence and the reference code.

2. A system in accordance with claim 1,
**characterized in that**
the identification data field (114), in particular the part code section (118) of the identification data field (114) corresponding to the reference code, is positioned directly at the start of the message (110).

3. A system in accordance with one of the preceding claims,
**characterized in that**
the reception unit has a FIFO buffer memory (120) which is configured to buffer the character sequence during the reception of the message (110).

4. A system in accordance with claim 3,
**characterized in that**
the storage capacity of the FIFO buffer memory (120) corresponds exactly to the length of the reference code.

5. A system in accordance with any one of the preceding claims,
**characterized in that**
the data transmission between the transmission unit and the reception unit takes place wirelessly.

6. A system in accordance with any one of the preceding claims, **characterized in that**
the reception unit is configured as an RFID reading device and the transmission unit is configured as an RFID transponder.

7. A safety switch for monitoring a predefined relative position of two parts which are movable with respect to one another, having a system in accordance with claim 6, wherein the RFID reading device is arranged at the one part and the RFID transponder is arranged at the other part, with a data transmission only being possible when the parts are located in the predefined relative position.

## Revendications

1. Système de transmission de données en série asynchrone comportant au moins une unité émettrice qui est conçue pour émettre un message (110) et au moins une unité réceptrice conçue pour recevoir le message (110), le message (110) comprenant au moins un champ de données d'identification (114) et un champ de données utiles (116),
**caractérisé en ce qu'**un code de référence est mémorisé dans l'unité réceptrice, lequel coïncide au moins avec une partie de code partiel (118) du champ de données d'identification (114), et
**en ce que** l'unité réceptrice est conçue pour comparer en continu une succession de signes reçue en dernier à partir d'un flux de données du message reçu (110) avec un code de référence et pour se synchroniser avec les signes suivants du message (110) après la constatation d'une coïncidence entre la succession de signes et le code de référence.

2. Système selon la revendication 1,
**caractérisé en ce que**
le champ de données d'identification (114), en particulier la partie de code partiel (118) qui correspond au code de référence, du champ de données d'identification (114) est positionné directement au début du message (110).

3. Système selon l'une des revendications précédentes,
**caractérisé en ce que**
l'unité réceptrice comprend une mémoire tampon "FIFO" (120) qui est conçue pour mémoriser temporairement la succession de signes pendant la réception du message (110).

4. Système selon la revendication 3,
**caractérisé en ce que**
la capacité de mémoire de la mémoire tampon FIFO (120) correspond précisément à la longueur du code de référence.

5. Système selon l'une des revendications précédentes,
**caractérisé en ce que**
la transmission de données entre l'unité émettrice et l'unité réceptrice s'effectue sans fil.

6. Système selon l'une des revendications précédentes,
**caractérisé en ce que**
l'unité réceptrice est réalisée sous la forme d'un appareil de lecture RFID et l'unité émettrice est réalisée sous la forme d'un transpondeur RFID.

7. Commutateur de sécurité pour surveiller une position relative prédéterminée de deux parties mobiles l'une par rapport à l'autre, comportant un système selon la revendication 6, dans lequel l'appareil de lecture RFID est agencé sur une partie et le transpondeur RFID est agencé sur l'autre partie, et une transmission de données est possible uniquement lorsque les parties se trouvent dans la position relative prédéterminée.
